Europäisches Patentamt

European Patent Office

Office européen des brevets

(11) Veröffentlichungsnummer: **0 046 905**
**B1**

(12) **EUROPÄISCHE PATENTSCHRIFT**

(45) Veröffentlichungstag der Patentschrift:
27.06.84

(21) Anmeldenummer: 81106298.3

(22) Anmeldetag: 13.08.81

(51) Int. Cl.³: **A 01 B 3/46, A 01 B 15/14**

(54) **Aufsattel-Drehpflug.**

(30) Priorität: 03.09.80 DE 3033133

(43) Veröffentlichungstag der Anmeldung:
10.03.82 Patentblatt 82/10

(45) Bekanntmachung des Hinweises auf die Patenterteilung:
27.06.84 Patentblatt 84/26

(84) Benannte Vertragsstaaten:
AT FR GB IT NL

(56) Entgegenhaltungen:
AT - B - 341 257
DE - A - 2 024 951
DE - A - 2 756 548
DE - B - 1 103 664
FR - A - 2 174 985
FR - A - 2 229 337
GB - A - 2 034 561
US - A - 3 830 312

(73) Patentinhaber: Rabewerk Heinrich Clausing, D-4515 Bad
Essen 8 - Linne (DE)

(72) Erfinder: Schröer, Friedrich, Im Weldengrund 5,
D-4515 Bad Essen 1 (DE)

(74) Vertreter: Missling, Arne, Dipl.-Ing. et al, Patentanwälte
Dipl.-Ing. R. Schlee Dipl.-Ing. A. Missling
Bismarckstrasse 43, D-6300 Giessen (DE)

## Beschreibung

Die Erfindung betrifft einen Aufsattel-Drehpflug nach dem Oberbegriff des Anspruches 1.

Ein derartiger Pflug ist aus der US-A-38 30 312 bekannt, wobei das Stützrad als Furchenrad ausgebildet ist und somit direkt hinter einem Pflugkörper auf dem Furchengrund läuft, den dieser gezogen hat. Der Nachteil eines Furchenrades als Stützrad besteht darin, daß dieses die Arbeitstiefe nicht oder nur unvollkommen einhalten kann. Die Bodenoberfläche wird nicht kopiert. Das Furchenrad ist ein gelenktes Rad, das relativ wenig Bewegungsfreiheit erfordert und unterhalb des Pflugrahmens verschwenkt werden kann. Damit dieses Furchenrad Platz hat, wurde der Abstand der Pflugkörper im Bereich des Furchenrades vergrößert.

Aus der FR-A-2 174 985 ist ein Pflug mit einem Pflugrahmen bekannt, der in Kastenbauweise aus einheitlichen Rahmenstücken ausgebildet ist, wobei alle Elemente gleich sind. Eine Verlängerung des Pflugrahmens ist hier nur im jeweils hinteren Bereich möglich, denn eine Verlängerung des Zugseiles ist nicht vorgesehen. Dieser Pflug weist darüber hinaus einen zweiradrigen Karren auf, dessen Landrad außerhalb der Arbeitsbreite des Pfluges läuft. Wollte man dieses vermeiden, so müßten dem Karren mindestens drei Pflugkörper nachgeschaltet werden, was zu einer ungünstigen Lastenverteilung führt.

Aufsattel-Drehpflüge nach dem Oberbegriff des Anspruches 1 zeigen weiterhin den Nachteil, daß es schwierig ist, einen derartigen Aufsattel-Drehpflug bei feuchten Boden und in unebenem Vorgelände zu manövrieren. Um die Manövrierfähigkeit zu verbessern, hat man den Aufsattel-Drehpflug mit einem lotrechten Gelenk versehen, so daß der Pflug gegenüber den Schlepper einschwenken kann, d. h. wie ein üblicher Einachshänger gefahren werden kann. Hierdurch wurde eine bessere Manövrierfähigkeit des Pfluges im Vorgelände erreicht, jedoch war es nunmehr erforderlich, das Vorgelände entsprechend zu verbreitern, was gleichfalls nachteilig ist. Ein Aufsattel-Drehpflug der eingangs genannten Art sollte darüber hinaus so ausgebildet sein, daß mit diesem unmittelbar bis an die Grenze des Nachbarfeldes gepflügt werden kann, ohne daß also die Räder des Pfluges auf dem Nachbarfeld laufen.

Der Erfindung liegt die Aufgabe zugrunde, einen Pflug der eingangs genannten Art so auszubilden, daß dieser einfach im Vorgelände zu manövrieren ist, daß das Vorgelände verhältnismäßig klein gehalten werden kann und mit dem Pflug bis an die Feldgrenze gepflügt werden kann, ohne daß die Räder des Pfluges auf dem Nachbarfeld laufen und daß der Pflug in einfacher Weise durch Anfügen weiterer Pflugkörper verlängerbar ist, ohne daß die vorgenannten Eigenschaften verloren gehen.

Diese Aufgabe wird mit den Merkmalen des kennzeichnenden Teils des Anspruches 1 gelöst. Durch die bogen- oder dreiecksförmige Auskragung im Pflugrahmen kann das Hinterrad sehr nahe an den vorhergehenden Pflugkörper herangebracht werden, so daß dieses noch frei laufen und schwenken kann. Es ist so möglich, das Hinterrad bis in die Symmetrieachse des Schleppers zu verlegen, wodurch eine sehr gute Manövrierfähigkeit des Pfluges erreicht wird, die besser ist als bei Pflügen mit einer zusätzlichen lotrechten Achse. Überdies kann durch die Weglassung des lotrechten Gelenks der Pflug im Vorgelände auf einem sehr beschränkten Raum gewendet werden. Durch die weitere Verschiebung des Hinterrades in oder in die Nähe der Symmetrieachse des Schleppers ist es ohne weiteres auch möglich, das Hinterrad innerhalb des Arbeitsbereiches des Pfluges zu halten. Ein derartiger Aufsattel-Pflug kann also somit ohne weiteres bis an die Feldgrenze pflügen, ohne daß ein Rad auf dem Nachbarfeld läuft. Das enge Heranrücken des Rades an die Pflugkörper vermindert auch die zum Drehen des Pfluges erforderliche Energie. Durch die von dem Hinterrad liegenden Flanschstellen im Pflugrahmen und dem Stabilisator, zwischen denen weitere Rahmen- bzw. Stabilisatorteile eingesetzt werden können, kann der Pflug auf die gewünschte Pflugkörperzahl gebracht werden, ohne daß die zuvor genannten Eigenschaften nenneswert verändert werden.

Durch die ausgeprägte Auskragung im Pflugrahmen wird erreicht, daß der Körperabstand bei Verwendung eines Nachlaufrades im Bereich dieses Nachlaufrades konstant gehalten werden kann. Hierdurch wird auch ein zusätzliches Pflugkörperpaar eingespart, das erforderlich gewesen wäre, um die Spur des Rades zumindest teilweise noch zu erfassen. Des weiteren ist es so möglich, das Hinterrad immer innerhalb einer bestimmten Position zum Ende des Pflugrahmens anzuordnen. Bei bekannten Pflügen müßte man hingegen bei bestimmter Pflugkörperzahl das Hinterrad weiter vorn laufen lassen, wodurch dieses zum einen wesentlich stärker belastet würde und was zum anderen zu einer nicht erwünschten Entlastung des Schleppers beim Akkern führt.

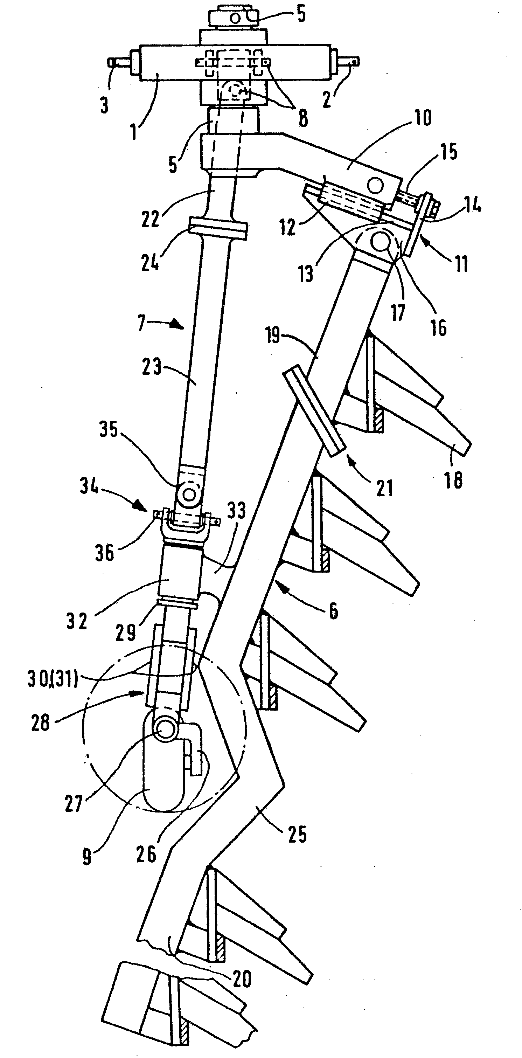

Weitere vorteilhafte Ausgestaltungen der Erfindung gehen aus den Unteransprüchen und der Beschreibung in Verbindung mit der Zeichnung hervor.

Ein Ausführungsbeispiel der Erfindung ist im folgenden anhand der Zeichnung beschrieben, die eine Draufsicht auf einen erfindungsgemäßen Aufsattel-Drehpflug zeigt.

In der Figur ist das Pflugvordergestell mit 1 bezeichnet. Dieses Pflugvordergestell weist in bekannter Weise Anschlußpunkte 2, 3 für die unteren Lenker und einen Anschlußpunkt für den oberen Lenker eines Dreipunktgestänges eines Schleppers auf. Im Pflugvordergestell 1 ist die Drehachse 5 des Pflugrahmens 6 gelagert. Des weiteren ist am Pflugvordergestell ein Stabilisator 7 über ein Universalgelenk 8 angeschlossen.

Dieser Stabilisator trägt ein Hinterrad 9. An der Drehachse 5 des Pfluges greift ein Arm 10 an, der eine Schnittbreitenverstelleinrichtung 11 aufweist. Diese Schnittbreitenverstelleinrichtung besteht aus einer Kulisse 12, in der ein Kulissenstein 13 verschiebbar ist. Dieser Kulissenstein 13 weist an seinem hinteren Ende ein Platte 14 auf, in der drehbar eine Schraube 15 gelagert ist. Diese Schraube 15 greift in eine mit Gewinde versehene Bohrung des Armes 10 ein. Durch Verdrehen der Schraube wird der Pflugrahmen 6 relativ zum Arm 10 verschoben.

Am Kulissenstein 13 sind des weiteren zwei Platten 16 befestigt, zwischen denen über ein Gelenk 17 der Pflugkörper 18 tragende Pflugrahmen 6 angeschlossen ist.

Der Pflugrahmen 6 ist zweiteilig ausgebildet und besteht aus einem vorderen Teil 19 und einem hinteren Teil 20. Beide Teile sind über Flansche 21 miteinander verbunden.

Der Stabilisator 7 ist gleichfalls zweiteilig ausgebildet, wobei die beiden Teile 22, 23 über Flansche 24 miteinander verbunden sind.

Der Pflugkörper 6 weist in seinem hinteren Teil 20 eine dreieckförmige Auskragung 25 auf, die zum gepflügten Land hin gerichtet ist. Der Pflugrahmen 6 ist im Bereich der Auskragung 25 dreifach geknickt. Im Bereich dieser Auskragung ist das als Nachlaufrad ausgebildete Hinterrad 9 angeordnet. Der Achsträger 26 des Hinterrades ist an einer Nachlaufachse 27 befestigt, die wiederum von einem Gelenkviereck 28 getragen wird, das an seiner anderen Seite an einer Platte 29 des Stabilisators 7 befestigt ist. Dieses Viergelenk, das aus zwei oberen Lenkern 30 und zwei unteren Lenkern 31 besteht, wird in bekannter Weise mit einem Hydraulikzylinder beaufschlagt, so daß durch Absenken oder Anheben des Hinterrades 9 relativ zum Pflugrahmen 6 dieser ausgehoben oder abgesenkt werden kann, wobei in bekannter Weise durch einen einstellbaren Anschlag die Arbeitstiefe begrenzt werden kann.

Der Stabilisator 7 ist in einem Lager 32 drehbar, das am Pflugrahmen 6 über einen Arm 33 befestigt ist. Beim Wenden der Pflugkörper schwenkt somit der Pflugrahmen 6 um das hintere Lager 32 und das Drehlager 5. Ebenso wie das vordere Ende des Stabilisators 7 über ein Kreuzgelenk am Pflugvordergestell 1 angeschlossen ist, ist auch im hinteren Teil 23 des Stabilisators ein Kreuzgelenk 34 vorgesehen, das von zwei lotrecht zueinander liegenden Achsen 35 und 36 gebildet ist.

Durch die dreiecksförmige Auskragung 25 im Pflugrahmen 6 ist es möglich, das Hinterrad sehr weit zu den Pflugkörpern zu verschieben, d. h. bis in oder nahe in die Symmetrieachse des Schleppers. Hierdurch wird das Lenkverhalten des Pfluges wesentlich verbessert, wodurch die bei bekannten Pflügen dieser Art aufgetretenen Schwierigkeiten beim Wenden des Pfluges im Vorgelände entfallen. Des weiteren ist das Hinterrad 9 so weit nach innen verschoben, daß dieses im Arbeitsbereich der Pflugkörper liegt, d. h.

also mit einem erfindungsgemäßen Pflug kann bis zum Feldrand gepflügt werden, ohne daß ein Rad des Pfluges auf dem Nachbarfeld laufen muß. Soll der Pflug verlängert werden, so brauchen lediglich entsprechende Pflugkörper tragende Verlängerungteile im Bereich des Flansches 21 eingesetzt zu werden. Das gleiche gilt für Einsatzstücke in den Stabilisator 7. Hierbei ist gewährleistet, daß das Hinterrad ständig im Arbeitsbereich des Pfluges läuft und so weit wie möglich zur Symmetrieachse des Schleppers hin verschoben bleibt, damit die guten Fahreigenschaften im Vorgelände erhalten bleiben.

## Patentansprüche

1. Aufsattel-Drehpflug mit einem Pflugvordergestell (1), einem drehbar im Pflugvordergestell (1) gelagerten Pflugrahmen (6) mit mehreren Pflugkörperpaaren (18) und einem von einem am Pflugvordergestell (1) angelenkten und am hinteren Ende am Pflugrahmen (6) gelagerten Stabilisator (7) gehaltenen Stützrad (9), wobei der Pflugrahmen (6) im Bereich des Stützrades (9) eine Auskragung (25) zum gepflügten Land hin aufweist, dadurch gekennzeichnet, daß der Pflugrahmen (6) und der Stabilisator (7) je aus mindestens zwei miteinander verflanschten Teilen (19, 20; 22, 23) bestehen, daß die Auskragung (25) bogen- oder dreiecksförmig ausgebildet ist, daß das Stützrad (9) als Nachlaufrad ausgebildet ist und innerhalb des Arbeitsbereiches des Pfluges auf dem ungepflügten Land läuft und daß die Flanschstellen (21, 24) im Pflugrahmen (6) und im Stabilisator (7) vor dem Nachlaufrad (9) liegen.

2. Pflug nach Anspruch 1, dadurch gekennzeichnet, daß das Hinterrad in oder nahe der Symmetrieebene des Schleppers liegt.

3. Pflug nach Anspruch 1 oder 2, dadurch gekennzeichnet, daß der Pflugrahmen (6) durch Pflugkörperpaare tragende Verlängerungsstücke und der Stabilisator (7) durch Einsatzstücke verlängerbar ist.

4. Pflug nach einem der Ansprüche 1 bis 3, dadurch gekennzeichnet, daß der Pflugrahmen über ein Gelenk (17) an eine Breitenverstelleinrichtung (11) angeschlossen ist, die ihrerseits an einem mit der Drehachse (5) des Pfluges verbundenen Arm (10) befestigt ist.

## Claims

1. A semi-mounted two-way plough having a front plough frame (1), a main plough frame (6), which is ratatably mounted in the front plough frame (1) and has a plurality of plough member pairs (18), and a support wheel (9), which is retained by a stabilizer (7) which is hinged on the front plough frame (1) and is mounted at the rear end on the main plough frame (6), the main plough frame (6) comprising a bracket (25), facing the ploughed land, in the region of the support wheel (9), characterized in that the main plough frame (6) and the stabilizer (7) each consists of at least two parts (19, 20; 22, 23) flanged to one another; in that the bracket (25) is curved or triangular; in that the support wheel (9) is in the form of a caster-type wheel and runs within the working area of the plough on the unploughed land; and in that the flange points (21, 24) in the main plough frame (6) and in the stabilizer (7) are situated in front of the caster-type wheel (9).

2. A plough as claimed in claim 1, characterized in that the rear wheel is in or near the plane of symmetry of the tractor.

3. A plough as claimed in claim 1 or 2, characterized in that the main plough frame (6) can be extended by extension members bearing pairs of plough members and the stabilizer (7) can be extended by insertion members.

4. A plough as claimed in one of claims 1 to 3, characterized in that the main plough frame is connected via an articulation (17) to a width adjusting device (11) which is in turn secured to an arm (10) connected to the rotating shaft (5) of the plough.

**Revendications**

1. Charrue réversible semi-portée, comportant un bâti avant (1), un châssis (6), monté pivotant sur le bâti avant (1), et pourvu de plusieurs paires de socs (18), ainsi qu'une roue porteuse (9), tenue par un stabilisateur (7), lui-même articulé sur le bâti avant (1) et monté par son extrémité arrière sur le châssis (6), ledit châssis (6) présentant, au niveau de la roue porteuse (9), une partie (25) saillante dans la direction du terrain labouré, caractérisée par le fait que le châssis (6) et le stabilisateur (7) sont constitués chacun par au moins deux pièces (19, 20; 22, 23), assemblées entre elles par des brides, que la partie saillante (25) est réalisée avec une forme arquée ou triangulaire, que la roue porteuse (9) est réalisée sous la forme d'une roue suiveuse, et roule sur le terrain non labouré dans la zone de travail de la charrue, et que les brides (21, 24) du châssis (6) et du stabilisateur (7) se trouvent en avant de la roue suiveuse (9).

2. Charrue selon la revendication 1, caractérisée par le fait que la roue arrière se trouve dans le, ou à proximité du plan de symétrie du tracteur.

3. Charrue selon la revendication 1 ou 2, caractérisée par le fait que le châssis (6) peut être allongé par des prolongateurs, portant des paires de socs, et que le stabilisateur (7) peut être allongé par des pièces intercalaires.

4. Charrue selon l'une des revendications 1 à 3, caractérisée par le fait que le châssis (6) est raccordé, par l'intermédiaire d'une articulation (17), à un dispositif de réglage de la largeur (11), qui est lui-même fixé sur un bras (10), relié au pivot (5) de la charrue.

0 046 905